(19) Europäisches Patentamt
European Patent Office
Office européen des brevets

(11) Veröffentlichungsnummer: **0 257 516**
**A2**

(12) # EUROPÄISCHE PATENTANMELDUNG

(21) Anmeldenummer: **87111930.1**

(22) Anmeldetag: **18.08.87**

(51) Int. Cl.[4]: **C08K 13/02** , C08L 25/02 , //(C08K13/02,3:22,5:52,5:53),(C-08L25/02,53:02)

(30) Priorität: **22.08.86 DE 3628577**

(43) Veröffentlichungstag der Anmeldung:
**02.03.88 Patentblatt 88/09**

(84) Benannte Vertragsstaaten:
**BE DE FR GB NL**

(71) Anmelder: **BASF Aktiengesellschaft**
**Carl-Bosch-Strasse 38**
**D-6700 Ludwigshafen(DE)**

(72) Erfinder: **Schwaben, Hans-Dieter, Dr.**
**Lindenstrasse 3**
**D-6721 Freisbach(DE)**
Erfinder: **Echte, Adolf, Dr.**
**Leuschnerstrasse 42**
**D-6700 Ludwigshafen(DE)**

(54) **Halogenfreie, selbstverlöschende, schlagfeste, thermoplastische Formmassen.**

(57) Die Erfindung betrifft eine halogenfreie, selbstverlöschende, schlagfeste, thermoplastische Formasse enthaltend, bezogen auf A + B + C + D,

A 10 bis 45 Gew.% mindestens eines thermoplastischen Harzes,

B 1 bis 25 Gew.% mindestens eines Blockcopolymeren mit mindestens drei Blöcken,

C 30 bis 70 Gew.% Aluminiumhydroxid und/oder Magnesiumhydroxid,

D 1 bis 25 Gew.% einer oder mehrerer organischer Phosphorverbindungen, dadurch gekennzeichnet, daß das thermoplastische Harz A mindestens ein vinylaromatisches Monomeres mit 8 bis 12 C-Atomen aufweist und daß ferner die organischen Phosphorverbindungen D ein Molekulargewicht von mindestens 250 $g.mol^{-1}$ aufweisen und ausgewählt werden aus der Gruppe der alkyl-und/oder arylsubstituierten Phosphinoxide, der alkyl-und/oder arylsubstituierten Phosphate und Mischungen davon.

Die Formmasse wird verwendet zur Herstellung von Formteilen.

EP 0 257 516 A2

# Halogenfreie, selbstverlöschende, schlagfeste, thermoplastische Formmasse

Die Erfindung betrifft eine selbstverlöschende, thermoplastische Formmasse enthaltend

A ein thermoplastisches Harz,
B ein Blockcopolymeres mit mindestens drei Blöcken,
C Aluminiumhydroxid und/oder Magnesiumhydroxid und
D eine oder mehrere organische Phosphorverbindungen.

Zum Stand der Technik nennen wir:

(1) DE-OS 27 51 496
(2) DE-OS 25 46 668 und
(3) DE-OS 27 39 429.

In (1) sind thermoplastische Harze auf Basis von PPO, einem linearen Drei-Blockcopolymeren und Phosphat beschrieben. Die bekannte Formmasse kann u.a. Flammschutzmittel und Aluminiumhydroxid und noch andere Mittel enthalten.

In (2) und (3) sind Styrolpolymerisate beschrieben, die Aluminiumhydroxid aufweisen.

Im Brandfalle zeigen Styrolpolymerisate eine stark rußende, hellgelbe Flamme. Dabei tritt das dem Fachmanne wohlbekannte Abtropfen brennenden Polymermaterials auf, das zu einer erheblichen Ausbreitung des Brandes und einer Vergrößerung des Schadens durch das Feuer führen kann.

Personen, die einem solchen Brand ausgesetzt sind, können dabei sowohl durch die Hitze als auch durch die Rauchgase gefährdet werden.

Um dies zu vermeiden, sind in der Vergangenheit Flammschutzausrüstungen für Styrolpolymerisate enwickelt worden, die in den meisten Fällen aus Halogenkohlenwasserstoffen, wie Chlorparaffinen, Okta-und Dekabromdiphenylether, in Verbindung mit Antimontrioxid bestehen.

Nachteilig an derart flammfest ausgerüsteten Polymeren ist

1. die Toxizität der Halogenverbindungen und des Antimontrioxids sowie
2. deren korrosive Wirkung auf die Verarbeitungsmaschinen.

Es ist dem Fachmanne bekannt, daß $Al(OH)_3$ [vgl. auch (1)] und $Mg(OH)_2$ zur Verringerung der Brennbarkeit von Kunststoffen verwendet werden können. Gegenüber den halogenhaltigen Flammschutzsystemen besitzen $Al(OH)_3$ und $Mg(OH)_2$ den Vorteil, daß weder sie selbst noch ihre Zersetzungsprodukte, $Al_2O_3$ resp. MgO und Wasser, toxisch oder korrosiv wirken und daß sie im Brandfalle zu einer Verringerung der Rauchgasdichte führen (R. Chalabi + C.F. Cullis, Eur. Polym. J. 18, 1067 (1982)).

Nachteilig erwies sich bisher stets, daß der Einsatz von $Al(OH)_3$ oder $Mg(OH)_2$ als Flammschutzmittel in Styrolpolymerisaten zu drastischen Verschlechterungen in den mechanischen Eigenschaften, insbesondere der Schlagzähigkeit, führt. Außerdem sind diese Materialien nicht mehr ausreichend fließfähig, was eine Anwendung verhinderte.

Es bestand daher die Aufgabe, halogenfrei flammfest ausgerüstete Formmassen zu schaffen, die die vom schlagfesten Polystyrol bekannte Schlagzähigkeit und Verarbeitbarkeit besitzen.

Diese Aufgabe wird durch eine Formmasse gemäß Patentanspruch 1 gelöst.

Die Erfindung betrifft daher eine halogenfreie, selbstverlöschende, schlagfeste, thermoplastische Formmasse enthaltend, bezogen auf A + B + C + D,

A 10 bis 45 Gew.% mindestens eines thermoplastischen Harzes,
B 1 bis 25 Gew.% mindestens eines Blockcopolymeren mit mindestens drei Blöcken,
C 30 bis 70 Gew.% Aluminiumhydroxid und/oder Magnesiumhydroxid,
D 1 bis 25 Gew.% einer oder mehrerer organischer Phosphorverbindungen.

Diese Formmasse ist dadurch gekennzeichnet, daß das thermoplastische Harz A mindestens ein vinylaromatisches Monomeres mit 8 bis 12 C-Atomen aufweist und daß ferner die organischen Phosphorverbindungen D ein Molekulargewicht von mindestens 250 $g.mol^{-1}$ aufweisen und ausgewählt werden aus der Gruppe der alkyl-und/oder arylsubstituierten Phosphinoxide, der alkyl-und/oder arylsubstituierten Phosphate und Mischungen davon.

Diese neuen Formmassen vereinigen eine ausreichende Flammfestigkeit mit einer guten Schlagzähigkeit.

Unter Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt sein oder in Form von Platten oder Bahnen gebracht sein.

Nachstehend werden der Aufbau der erfindungsgemäßen Formmasse, die Komponenten der Formmasse und die Herstellung der Formmasse beschrieben.

Die Formmasse enthält die Komponenten A, B, C und D. Vorzugsweise besteht sie aus diesen. Sie kann übliche Zusatzstoffe, Komponente E, enthalten. Die erfindungsgemäße Formmasse ist aufgebaut aus, jeweils bezogen auf A + B + C + D:

A: 10 bis 45 Gew.%, vorzugsweise 20 bis 40 Gew.%,

B: 1 bis 25 Gew.%, vorzugsweise 5 bis 20 Gew.%,

C: 30 bis 70 Gew.%, vorzugsweise 45 bis 60 Gew.%,

D: 1 bis 25 Gew.%, vorzugsweise 2 bis 15 Gew.%,

Zusätzlich kann die Formmasse, bezogen auf 100 Gew.Teile A + B + C + D, enthalten:

E 0,01 bis 30 Gew.Teile, insbesondere 0,05 bis 25 Gew.Teile.

Komponente A

Die Komponente A der erfindungsgemäßen Formmassen soll wenigstens ein Polymerisat sein, das ein monovinylaromatisches Monomeres mit 8 bis 12 C-Atomen enthält. Als monovinylaromatische Monomere kommt dabei insbesondere Styrol in Betracht, ferner die kern-oder seitenkettenalkylierten Styrole. Vorzugsweise wird ausschließlich Styrol verwendet. Vorzugsweise handelt es sich bei der Komponente A um - schlagfest modifiziertes Polystyrol, das durch Polymerisation von Styrol in Gegenwart eines Kautschuks erhalten wird. Es können jedoch auch die üblichen SAN-Copolymerisate oder die ABS-Harze verwendet werden.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind insbesondere Polybutadiene und Mischpolymerisate des Butadiens mit Styrol mit einer Glastemperatur under -20°C.

Die Zusammensetzung der schlagfesten Polystyrole kann in den Grenzen 70 bis 97 Gew.% Styrol, 30 bis 3 Gew.% Butadien, bei einer VZ der Hartmatrix im Bereich von 50 bis 140 ml/g liegen.

Komponente B

Die Komponente B der erfindungsgemäßen Formmasse ist ein lineares oder verzweigtes Blockcopolymerisat mit mindestens drei Blöcken, von denen zwei eine Glastemperatur über 20°C und einer eine Glastemperatur unterhalb von -10°C besitzen.

Derartige Copolymere werden vorzugsweise durch anionische Polymerisation mit Li-Alkylen als Initiator hergestellt. Aber auch andere Verfahren, wie die radikalische Polymerisation oder eine Verknüpfung bereits fertiger Polymerketten zu einer einzigen Kette mit Hilfe funktioneller Gruppen sind möglich. Die Übergänge zwischen den Blöcken können entweder scharf oder verschmiert oder eine Kombination aus diesen beiden Möglichkeiten sein. Bevorzugt werden lineare Drei-Blockcopolymere der allgemeinen Formel $\overline{A}$ -$\overline{B}$ -$\overline{A}$ mit scharfem Übergang eingesetzt. Zum Aufbau der beiden äußeren Blöcke $\overline{A}$ kommen monovinylaromatische Monomere in Betracht, die 8 bis einschließlich 12 Kohlenstoffatome pro Molekül enthalten. Genannt seien beispielsweise Styrol, 3-Methylstyrol, 4-Methylstyrol, 4-Isopropylstyrol, 2,4-Dimethylstyrol, 1-Vinylnaphthalin, 2-Vinylnapthalin und dgl. einschließlich einem Gemisch davon. Bevorzugt ist Styrol.

Als Monomere zum Aufbau des $\overline{B}$ -Blockes können konjugierte Diene mit 4 bis einschließlich 12 Kohlenstoffatomen pro Molekül, beispielsweise 1,3-Butadien, 6-Phenyl-1,3-hexadien und dgl. einschließlich Gemischen aus zwei oder mehreren dieser Diene verwendet werden. Die bevorzugten konjugierten Diene sind Butadien und Isopren.

Der $\overline{B}$ -Block besitzt kautschukelastische Eigenschaften, die erhalten bleiben, wenn bis zu 10 Gew.% des den Block B aufbauenden Monomeren durch Monomere ersetzt werden, die den Block A aufbauen. Daher können auch diese Copolymere als Komponente B eingesetzt werden. Vorzugsweise werden lineare Styrol-Butadien-Styrol-Blockcopolymere mit außenliegenden gleich großen Styrolblöcken angewendet.

Das Molekulargewicht (Gewichtsmittel) des Blockes mit der Glastemperatur unterhalb -10°C beträgt bevorzugt 40.000 bis 300.000, besonders bevorzugt 60.000 bis 200.000 und das der Blöcke mit einer Glastemperatur oberhalb von +20°C, bevorzugt 5.000 bis 80.000, besonders bevorzugt 15.000 bis 50.000. Der Gewichtsanteil der Blöcke mit der Glastemperatur oberhalb von +20°C, bezogen auf das Gesamtblockpolymere, kann von 5 % bis 60 % betragen, in der Regel beträgt er 10 % bis 40 % und liegt bevorzugt ausschließlich in Form von Blockstyrol vor (Dien = 100-Styrol).

Komponente C

Als Komponente C kommen Aluminium-und/oder Magnesiumhydroxide zur Verwendung, deren $d_{50}$-Werte zwischen 0,4 und 25 µm, vorzugsweise zwischen 1 und 10 µm, liegen. Sie können sowohl als oberflächenunbehandelte als auch als oberflächenbehandelte Typen eingesetzt werden. Die Oberflächenbehandlung, zu der organische Silizium-oder Titanverbindungen oder organische Fettsäuren oder deren Salze eingesetzt werden, sollen die Einarbeitung der anorganischen Füllstoffe in die Polymerphase erleichtern.

Komponente D

Als Komponente D werden ein Phosphinoxid der allgemeinen Formel

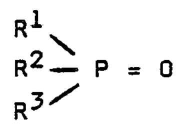 ,

worin $R^1$, $R^2$ und $R^3$ gleiche oder verschiedene substituierte oder unsubstituierte Alkyl-, Aryl-, Alkylaryl-oder Cycloalkylgruppen darstellen und/oder ein Phosphat der allgemeinen Formel

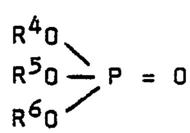 ,

worin $R^4$, $R^5$ und $R^6$ gleiche oder verschiedene substituierte oder unsubstituierte Alkyl, Aryl-, Alkylaryl-oder Cycloalkylgruppen sein können, verwendet.

Typische Vertreter der Phosphinoxide sind Triphenylphosphinoxid, Tritolylphosphinoxid, Trisnonylphosphinoxid, Tris-(n-butyl)phosphinoxid, Tris-(n-hexyl)-phosphinoxid, Tris-(n-octyl)-phosphinoxid, Tris-(Cyanoethyl)-phosphinoxid, Benzylbis-(cyclohexyl)-phosphinoxid. Besonders bevorzugt eingesetzt werden Triphenylphosphinoxid, Triscyclohexylphosphinoxid und Tri-(n-octyl)-phosphinoxid.

Als Phosphate kommen vor allem alkyl-und arylsubstituierte Phosphate in Betracht. Beispiele sind Phenylbisdodecylphosphat, Phenylbisneopentylphosphat, Trixylylphosphat, Tritolylphosphat, Trimesitylphosphat, Tricresylphosphat, Triphenylphosphat. Besonders geeignet sind Phosphate mit drei Arylresten, insbesondere Triphenylphosphat, Trixylylphosphat sowie Trimesitylphosphat.

Es können entweder Phosphinoxid resp. Phosphat alleine oder in jedem beliebigen Mischungsverhältnis zusammen eingesetzt werden.

Komponente E

Die erfindungsgemäße Formmasse kann als Komponente E übliche Zusatzstoffe, wie Pigmente, Antistatika, Antioxidantien und andere Stabilisatoren und Schmiermittel enthalten.

Man stellt die erfindungsgemäßen thermoplastischen Formmassen wie üblich auf Vorrichtungen, die ein homogenes Mischen zulassen, wie Knetern, Extrudern oder Walzenmischgeräten her.

Durch die gleichzeitige Verwendung der Komponenten C und D erhält man völlig überraschend gut fließende, flammfeste Formmassen.

Die in den Beispielen und Vergleichsversuchen beschriebenen Parameter wurden wir folgt bestimmt:

1. Die Flammschutzprüfung erfolgt im vertikalen Brandschutztest an 3 mm Teststäbchen zwecks Einordnung in eine der Brandklassen UL 94 V0, UL 94 V1 oder UL 94 V2.

2. Die Lochkerbschlagzähigkeit wurde nach DIN 53753 an bei einer Massetemperatur von 200°C spritzgegossenen Normkleinstäben gemessen. Prüftemperatur war 23°C.

3. Der Schmelzfließindex der Formmassen wurde bei 200°C mit 5 kp gemäß DIN 53735 bestimmt.

Zur Herstellung erfindungsgemäßer Formmassen und von Vergleichsproben wurden folgende Produkte verwendet:

A Ein im Handel erhältliches schlagfestes Polystyrol der BASF (Polystyrol 476 L) mit einem Polybutadiengehalt von 8,07 Gew.% und einer VZ 70 der Hartmatrix (gemessen in 0,5 %iger Lösung in Toluol bei 23°C).

$B_1$ Ein im Handel erhältliches lineares Styrol-Butadien-Styrol-Dreiblockcopolymerisat mit 30 Gew.% Gesamtstyrol in Form von Blockstyrol (®Cariflex TR 1101).

$B_2$ Ein im Handel erhältliches lineares selektiv hydriertes S-B-S-Dreiblockcopolymerisat mit 29 Gew.% Gesamtstyrol als Blockstyrol und einer Brookfield-Viskosität von 550 (in 20 %iger Toluollösung bei 77°F [®Kraton G 1652 der Firma Shell].

$B_3$ Ein im Handel erhältliches lineares selektiv hydriertes S-B-S-Dreiblockcopolymerisat mit 28 Gew.% Gesamtstyrol als Blockstyrol und einer Brookfield-Viskosität von 1500 [®Kraton G 1650].

$C_1$ Einen im Handel erhältlichen Hydrargillit der Reinheit 98,7 % mit einer mittleren Korngröße, ($d_{50}$-Wert) von 1,5 bis 2,0 µm, und einem Korngrößenbereich von 0,8 bis 4 µm bei einer spezifischen Oberfläche von 8 bis 10 $m^2/g$ (BET) [®Apyral 90 der Firma Vereinigte Aluminiumwerke]

$C_2$ Ein $Mg(OH)_2$ der Firma Sachtleben (NF 2000), $d_{50}$-Wert 0,4 bis 0,6 µm.

$D_1$ Triphenylphosphinoxid

$D_2$ Triphenylphosphat

Die Erfindung wird durch die nachfolgenden Beispiele näher erläutert. Alle darin genannten Teile und Prozente beziehen sich auf das Gewicht.

Beispiele 1 bis 4 und Vergleichsversuche I und II

Die Proben für die folgenden Beispiele und Vergleichsversuche wurden auf einem Zwei-Schnecken-Extruder ZDSK 30 der Firma Werner und Pfleiderer bei T = 200°C im Falle von $Al(OH)_3$ und bei T = 250°C im Falle von $Mg(OH)_2$ durch Mischen der trockenen Komponenten A bis D in den in der Tabelle genannten Anteilen hergestellt.

In die Tabelle sind auch die Ergebnisse der an den Formmassen durchgeführten Messungen mit aufgenommen.

Die Beispiele 1 bis 3 und das Vergleichsbeispiel I zeigen, daß man durch die gleichzeitige Verwendung von TPPO resp. TPPA un $Al(OH)_3$ gut fließende und damit im Spritzguß verarbeitbare selbstverlöschende Formmassen erhält.

Beispiel 4 und Vergleichsbeispiel II zeigen, daß dies ebenfalls für $Mg(OH)_2$ gilt.

Die Verwendung der Blockkautschuke bewirkt ein Ansteigen der Lochkerbschlagzähigkeit von dem extrem niedrigen Niveau der Proben der Vergleichsversuche I und II auf eine für praktische Anwendungen ausreichende Höhe von 5 bis 7 $kJ/m^2$.

Tabelle

| | Vergleichs-versuch I | Vergleichs-versuch II | Beispiel 1 | 2 | 3 | 4 |
|---|---|---|---|---|---|---|
| Gew.% A | 50 | 50 | 30 | 30 | 30 | 30 |
| Gew.% $C_I$ | 50 | - | 50 | 50 | 50 | - |
| Gew.% $C_2$ | - | 50 | - | - | - | 50 |
| Gew.% Block-kautschuk $B_1$ | - | - | 10 | - | - | 10 |
| $B_2$ | | | - | 10 | - | - |
| $B_3$ | | | - | - | 10 | - |
| Gew.% $D_1$ | - | - | - | 10 | 10 | - |
| $D_2$ | | | 10 | - | - | 10 |
| MFI (g/10 min) | 0,1 | 0,1 | 8,3 | 6,8 | 7,2 | 8,5 |
| LKSZ ($kJ/m^2$) | 2,2 | 1,8 | 5,0 | 7,3 | 6,8 | 7,2 |
| Einstufung nach UL 94 | - | - | V0 | V0 | V0 | V0 |

## Ansprüche

1. Halogenfreie, selbstverlöschende, schlagfeste, thermoplastische Formmasse enthaltend, bezogen auf A+B+C+D,
A 10 bis 45 Gew.% mindestens eines thermoplastischen Harzes,
B 1 bis 25 Gew.% mindestens eines Blockcopolymeren mit mindestens drei Blöcken,
C 30 bis 70 Gew.% Aluminiumhydroxid und/oder Magnesiumhydroxid,
D 1 bis 25 Gew.% einer oder mehrerer organischer Phosphorverbindungen,
dadurch gekennzeichnet, daß das thermoplastische Harz A mindestens ein vinylaromatisches Monomeres mit 8 bis 12 C-Atomen aufweist und daß ferner die organischen Phosphorverbindungen D ein Molekulargewicht von mindestens 250 $g.mol^{-1}$ aufweisen und ausgewählt werden aus der Gruppe der alkyl-und/oder arylsubstituierten Phosphinoxide, der alkyl-und/oder arylsubstituierten Phosphate und Mischungen davon.

2. Formmasse nach Anspruch 1 enthaltend übliche Zusatzstoffe E.

3. Formmasse bestehend aus den Komponenten A, B, C und D.

4. Formmasse nach Anspruch 1, dadurch gekennzeichnet, daß der thermoplastische Harz A ein Styrol-Acrylnitril-Copolymerisat ist.

5. Formmasse nach Anspruch 4, dadurch gekennzeichnet, daß der thermoplastische Harz A Styrol und Acrylnitril, gepfropft auf Polybutadien, (ABS) darstellt.

6. Formmasse nach Anspruch 1, dadurch gekennzeichnet, daß der thermoplastische Harz A aus 70 bis 97 Gew.% Styrol und 3 bis 30 Gew.% Butadien besteht (schlagfestes Polystyrol).

7. Halogenfreie, selbstverlöschende, schlagfeste, thermoplastische Formmasse enthaltend, bezogen auf A+B+C+D,
A 20 bis 40 Gew.% mindestens eines thermoplastischen Harzes,
B 5 bis 20 Gew.% mindestens eines linearen aus Styrol und Butadien bestehenden Blockcopolymeren mit drei Blöcken, wobei die Styrolblöcke außen liegen,
C 45 bis 60 Gew.% Aluminiumhydroxid und/oder Magnesiumhydroxid,
D 2 Bis 15 Gew.% einer oder mehrerer organischer Phosphorverbindungen,
dadurch gekennzeichnet, daß das thermoplastische Harz A mindestens ein vinylaromatisches Monomeres

mit 8 bis 12 C-Atomen aufweist und daß ferner die organischen Phosphorverbindungen D ein Molekulargewicht von mindestens 250 $g.mol^{-1}$ aufweisen und ausgewählt werden aus der Gruppe der alkyl-und/oder arylsubstituierten Phosphinoxide, der alkyl-und/oder arylsubstituierten Phosphate und Mischungen davon.

8. Halogenfreie, selbstverlöschende, schlagfeste, thermoplastische Formmasse enthaltend, bezogen auf A+B+C+D,

A 20 bis 40 Gew.% mindestens eines thermoplastischen Harzes,

B 5 bis 20 Gew.% eines linearen, aus 60 bis 90 Gew.% Butadien und 40 bis 10 Gew.% Styrol bestehenden, Blockcopolymeren mit drei Blöcken, wobei die Styrolblöcke außen liegen und das gesamte Styrol in Blockform vorliegt,

C 45 bis 60 Gew.% Aluminiumhydroxid und/oder Magnesiumhydroxid,

D 2 bis 15 Gew.% einer oder mehrerer organischer Phosphorverbindungen,

dadurch gekennzeichnet, daß das thermoplastische Harz A mindestens ein vinylaromatisches Monomeres mit 8 bis 12 C-Atomen aufweist und daß ferner die organischen Phosphorverbindungen D ein Molekulargewicht von mindestens 250 $g.mol^{-1}$ aufweisen und ausgewählt werden aus der Gruppe von Triphenylphosphinoxid oder Triphenylphosphat und Mischungen davon.

9. Verwendung der Formmasse gemäß Anspruch 1 zur Herstellung von Formteilen.

10. Formteile aus Formmassen gemäß Anspruch 1.